# EUROPEAN PATENT APPLICATION

(11) **EP 1 589 344 A1**
(43) Date of publication of application: **26.10.2005**
(21) Application number: 04706839.0
(22) Date of filing: 30.01.2004
(51) Int. Cl.: G01N 35/10

(54) **MONITORING FUNCTION-EQUIPPED DISPENSING SYSTEM AND METHOD OF MONITORING DISPENSING DEVICE**

(30) Priority: 31.01.2003 JP 2003025289
(71) Applicant: Universal Bio Research Co., Ltd., Matsudo-shi, Chiba 271-0064 (JP)
(72) Inventor: TAJIMA, Hideji, Matsudo-shi, Chiba 271-0064 (JP); HIRAHARA, Yoshinao, Matsudo-shi, Chiba 271-0064 (JP)
(74) Representative: Bohnenberger, Johannes
(86) International application number: PCT/JP2004/000921
(87) International publication number: WO 2004/074848

(57) **Abstract**

A monitoring function-equipped dispensing system and a method of monitoring the dispensing system wherein conditions in a pipeline can be identified accurately and precisely by not only optically measuring conditions in the pipeline, but performing other measurements reinforcing the former.

The system comprises: one or more translucent or semi-translucent pipelines; one or more pressure regulating units which respectively regulate the pressures in the pipelines; an elevating/lowering unit which enables the pipelines to be elevated/lowered; a pressure measuring unit which measures the pressures in the respective pipelines when operation instructions are given to the pressure regulating unit; an optical measurement unit which optically measures the conditions of the pipelines above the container disposition area, when operations based on operation instructions including operation instructions to the pressure regulating unit are completed; and a monitoring unit which judges the conditions in the pipelines based on the operation instructions and measurement results of the pressure measuring unit and the optical measurement unit so as to obtain monitoring results that associate the judged results with respective pipelines and the operation instructions.

## Description

### TECHNICAL FIELD

The present invention relates to a monitoring function-equipped dispensing system and a method of monitoring the dispensing system. More precisely, the invention relates to a monitoring function-equipped dispensing system comprising translucent or semi-translucent pipelines, pressure regulating units which respectively regulate the pressures in the pipelines to suck and discharge fluids with respect to the pipelines, and an elevating/lowering unit which enable the pipelines to be elevated/lowered, and to a method of monitoring the dispensing system. The system is useful in fields where highly accurate examination, operation, or processing having high quantitativity is required, in particular, such fields as chemistry including biochemistry, and medicine, pharmacology, engineering, agriculture, livestock industry, fisheries or the like.

### BACKGROUND ART

Conventionally, there has been a device invented by the inventors of the present application for measuring the conditions of fluids in pipelines of a dispensing system, wherein a fluid sensor which optically identifies the type of fluid passing through pipes is provided, and an amount of passing fluid is obtained by integral analysis based on a signal indicating operation conditions either of suction or dispensing, and an output signal from the fluid sensor (Japanese Unexamined Patent Publication No. Hei 07-35758).

Moreover, there has been an apparatus wherein a plurality of light-measuring units are provided along the longitudinal direction of a nozzle, and partial characteristics obtained by the respective units are coupled to each other to measure the liquid amount in the nozzle (Japanese Unexamined Patent Publication No. Hei 10-206214). Furthermore, there has been a device invented by the inventors of the present application, which checks the operation of a dispenser, mainly the condition and the amount of a sucked liquid, using an optical device (International Publication No. 01/48487 pamphlet).

Furthermore, there is known a dispensing system wherein the internal pressure of the pipelines is measured by a detection device when a liquid is sucked into the pipelines. (Japanese Unexamined Patent Publication No. Sho 61-202165).

Incidentally, as described above, the condition of the dispensing system is either such that; the amount of a sucked liquid is optically measured by detecting the liquid surface using a photodetector provided at one point of a pipeline, the amount or the condition of a liquid is checked by optical measurement using photodetectors and image pickup devices at a plurality of points, or the pressure is measured.

However, in order to identify the condition in a pipeline more accurately and precisely, it is necessary to identify every condition including the sucking and discharging time, by measuring the conditions in the pipeline over all of the elevating/lowering route where the pipeline is operable, or at all times during the operation.

Sucking and discharging of a liquid with respect to a container are normally performed while the point of a pipeline is inserted into the container. In particular, in order to perform sucking, it is important to detect the liquid surface in order to determine the suction time or the lowered distance, according to the liquid amount stored in the container. However, the container is not always transparent. Moreover in the case of a container in which a large number of liquid storage portions are disposed, optical measurement of the inside of the container can not be performed from the outside of the container. Consequently, it is not only necessary to optically measure the pipeline from the outside of the container, but to make the inside of the container optically measurable. Therefore, there has been a problem in that the structure of the optical measuring device may become complicated, or the scale of the device may be enlarged.

Furthermore, even if the optical conditions in the pipelines that are inserted into the container can be measured from the side, there has been a problem in that determination of the sucking time only from the optical conditions is not always easy.

Moreover, by only performing optical measurement, it is difficult to detect clogging in the pipelines caused by solid bodies, viscous substances and the like contained in the liquid, with respect to the preset sucking and discharging time determined from the instructed liquid amount. Moreover, a huge memory capacity is required to perform optical measurement at all times during the operation (for example, to obtain a dynamic image), and the analysis is also difficult.

Moreover, conventionally, optical measurement is performed with respect to one pipeline at most. Alternatively photodetectors or imagers are respectively provided for a plurality pipelines. Therefore, as the number of the pipelines is increased, the number of optical measuring devices is also increased, causing concern of enlarging the scale of the device. Moreover, since the optical device is provided part way along the route where the pipelines are elevated/lowered, the presence of the optical device interferes with the operation or the observation of the pipelines by a user, thus making handling difficult. Furthermore, due to the depth of the optical device in the optical axis direction, particularly in order to receive light from an area having a large angle for a visual field of a plurality of pipelines, it is necessary to extend the distance between the optical device and the pipelines, thus causing a problem in that the scale of the device may be enlarged, or the work area may be narrowed.

On the other hand, in a device provided with a pressure measuring device only, there has been a problem in that, even though the liquid surface can be detected, it is not possible to know whether or not sucking and discharging has been performed for an accurate liquid amount, nor conditions such as the hue of the liquid after completing the respective operations.

Moreover, in the case where a large number of containers are handled, there has been a problem in that, even if an inconvenience in the process of one container is found, operations for removing the inconvenience by stopping or repeating the process interfere with the other large number of normal processes.

Furthermore, there has been a problem in that, if the occurrence of such an inconvenience is previously assumed and a complicated control system having a feedback function is provided, the processing procedure may become complicated, the scale of the device may be enlarged, or the manufacturing cost of the device may be greatly increased.

Therefore, the present invention has been devised to solve the above problems, with a first object of providing a monitoring function-equipped dispensing system and a method of monitoring the dispensing system wherein conditions in a pipeline can be identified accurately and precisely by not only optically measuring conditions in the pipeline, but by performing other measurements reinforcing the former.

A second object is to provide a monitoring function-equipped dispensing system and a method of monitoring the dispensing system wherein conditions in a pipeline can be identified efficiently and reliably without enlarging the scale of the device, making a required memory capacity large, nor complicating the device structure or control procedure.

A third object is to provide a monitoring function-equipped dispensing system and a method of monitoring the dispensing system wherein conditions in a pipeline can be reliably confirmed even after completing a series of processes, by measuring in reliable association with the instructed operation contents, or the operation conditions.

A fourth object is to provide a monitoring function-equipped dispensing system and a method of monitoring the dispensing system wherein by confirming a container position, highly reliable processes which can measure conditions in a pipeline in association with the container position can be performed.

A fifth object is to provide a monitoring function-equipped dispensing system and a method of monitoring the dispensing system wherein a plurality pipelines can be efficiently and accurately monitored.

A sixth object is to provide a monitoring function-equipped dispensing system and a method of monitoring the dispensing system which monitors a pipeline or conditions in the pipeline with respect to various processes that are suitable for automization.

### DISCLOSURE OF THE INVENTION

In order to solve the above technical problems, a first aspect of the present invention is a monitoring function-equipped dispensing system comprising: one or more translucent or semi-translucent pipelines; one or more pressure regulating units which respectively regulate the pressures in the pipelines so as to suck and discharge fluids with respect to the pipelines; an elevating/lowering unit which enables the pipelines to be elevated/lowered so that they can be inserted/extracted with respect to a container in a container disposition area which is provided under the pipelines and has containers disposed therein; a pressure measuring unit which measures the pressures in the respective pipelines when operation instructions are given to the pressure regulating unit; an optical measurement unit which optically measures the conditions of the pipelines above the container disposition area, when respective operations based on operation instructions including operation instructions to the pressure regulating unit are completed; and a monitoring unit which judges the conditions in the pipelines based on the operation instructions and measurement results of the pressure measuring unit and the optical measurement unit so as to obtain monitoring results that associate the judged results with respective pipelines and the respective operation instructions.

Here, the point of the pipeline must be a size which allows insertion into the opening of the container. Moreover, the reason why the pipeline is "translucent or semi-translucent" is to enable measurement of the inside by the optical measurement unit. The presence of the "pressure measuring unit" enables not only detection of the liquid surface which can not be measured by the optical measurement unit in the case where the point of the pipeline is inserted into the container, and furthermore identification of the conditions of sucking, discharging, or storing, but also enables ready measurement of clogging of the pipeline. Since "optically measured...when the respective operations are completed", it is sufficient to respectively perform optical measurements after completing the respective operations. If images are captured as the optical measurement, it is sufficient to obtain the static images at the time of completing the respective operations. The "operation instructions to the pressure regulating unit" include for example, instructions of sucking, discharging, storing, stirring, washing, and the like. Other operation instructions include for example, movement, detachment, or attachment of the pipeline, separation or clarifying using magnetic particles, and the like.

Data of the monitoring results obtained by the "monitoring unit" is saved or stored in the monitoring function-equipped dispensing system, and can be used as the source material when the user reviews the reliability of the results of the processes at the time of completing a series of processes.

"Conditions of the pipeline" means not only the presence/absence of the pipeline, but also conditions of a liquid in the pipeline, for example, the position of the liquid surface, the condition of bubbles in the liquid, the presence of droplets, the hue, luminosity, and transmittancy of the liquid, and the like.

According to the first aspect of the present invention, the pipelines are monitored by combining both of the pressure measurement and the optical measurement. Consequently, the pressure measurement and the optical measurement mutually reinforce each other, promoting a faithful and accurate execution of the operation instructions. Furthermore, by monitoring the execution of the operations, an even more reliable system can be realized.

Moreover, according to the present invention, by promoting the suction of an accurate liquid amount in a container, by detecting the liquid surface in the container, and furthermore by monitoring for example for an abnormality in the liquid amount stored in the container, an abnormality in the sucked liquid amount due to clogging in the pipeline and the detection of the liquid surface in the pipeline, or the discharged liquid amount due to the measurement of the residual liquid amount after discharging or the presence of droplets, and an abnormality in the density due to the hue, the luminosity, or the like of the liquid, then reliable processing in the dispensing system can be realized. As a result, high reliability can be obtained without having any complicated structure such as feedback, nor performing any complicated control.

Moreover, in the data of these monitoring results, the judged results are associated with the respective operation instructions and the respective pipelines. Consequently, if there is any abnormality, it is not necessary to immediately stop the process and repeat or modify the abnormal part, but the process can be continued by saving or storing the data without interrupting the process, and an operation, a pipeline, or a container having the abnormality can be specified after completing the process, so that the process can be efficiently performed.

Furthermore, in the present invention, the measurements are separated to perform the pressure measurement during the operation, and to perform the optical measurement after completing the operation. Therefore the required memory capacity can be economized, and every condition for the pipeline, the liquid stored in the pipeline, or the like including the condition during the operation and the condition in the container can be efficiently monitored.

A second aspect of the present invention is a monitoring function-equipped dispensing system wherein the optical measurement unit has an imaging unit which captures an image of the plurality of pipelines at once. Since "image capture" is performed respectively after completing operations, it is sufficient to obtain the respective static images.

According to the second aspect of the present invention, by capturing the image of a plurality of pipelines all in at once, it becomes unnecessary to provide the imaging unit for each pipeline, nor to provide the imaging unit movable with respect to the pipelines. Therefore the structure of the system can be simplified. Furthermore, by capturing the image of a plurality of pipelines at once, the difference between the pipelines can be identified more clearly.

A third aspect of the present invention is a monitoring function-equipped dispensing system wherein an optical axis of a lens of the imaging unit is along an axial direction of the pipeline, and the optical measurement unit further has a reflector which reflects the light incident from the pipeline towards the lens of the imaging unit.

In order to capture the image of a plurality of pipelines at once, it is necessary to take long optical paths between the pipelines and the imaging unit. Therefore, the horizontal distances of the optical paths are shortened using the reflector.

The reflector is preferably supported movably so that the length of the optical paths can be changed according to the position or the number of the pipelines the image of which is to be captured. The "reflector" includes a prism or the like, besides a mirror.

According to the third aspect of the present invention, the optical axis of the lens of the imaging unit is provided along the axial direction of the pipeline, and a reflector which reflects the incident light from the pipeline is provided. Consequently, it becomes possible to suppress the enlargement of the scale of the system in the horizontal direction due to the presence of the optical measurement unit, and a greater moving range in the horizontal direction can be taken. Therefore the working efficiency or the space utilization efficiency is high.

A fourth aspect of the present invention is a monitoring function-equipped dispensing system wherein the optical measurement unit further has a light irradiation unit which can irradiate light to the pipelines above the container disposition area.

According to the fourth aspect of the present invention, the light irradiation unit which irradiates the pipelines is provided so that conditions in the pipelines can be measured more clearly and reliably.

A fifth aspect of the present invention is a monitoring function-equipped dispensing system wherein the pipelines, the pressure regulating unit, pressure measuring unit, optical measurement unit, and elevating/lowering unit are provided on a base plate, and there is a moving unit which can move the base plate relatively with respect to the container disposition area provided below the base plate, and the pipelines are provided so as to be movable in the vertical direction past the base plate so that points thereof can be respectively inserted/extracted into/from one or more containers provided in the container disposition area.

According to the present invention, since it is not necessary to relatively move the optical measurement unit and the like according to the position of the pipelines, the structure can be simplified. At this time, the pipelines are preferably movable so that they can be inserted/extracted with respect to all containers belonging to the container disposition area.

According to the fifth aspect of the present invention, since the pipelines, the pressure regulating unit, the pressure measuring unit, the optical measurement unit, and the elevating/lowering unit are movable altogether, the measurement can be performed always nearby the pipelines, and hence the reliability of measurement is high. Moreover, processing can be performed on a large number of containers. If the mechanism of the moving unit is also provided on the base plate, various component parts except for the piping which can be moved up and down, are provided on the base plate. Therefore a large work area can be taken, and the working efficiency is high.

A sixth aspect of the present invention is a monitoring function-equipped dispensing system which has a container disposition confirming unit which reads an identifier affixed to a container disposed in the container disposition area, to obtain disposition data showing the type and the disposition of a container in the container disposition area.

Here, the "identifier" includes a barcode for example, and the identifier is affixed on the upper side of the container.

The "disposition data" includes for example, the type of the container, the contents of substances stored in the container such as the type, the amount, and the like, the date when the substances are contained, and the like.

If the identifier is a slim data such as a barcode, the read unit of the container disposition confirming unit is preferably rotated according to the direction of the affixed identifier, for example about the vertical direction, or the horizontal direction.

According to the sixth aspect of the present invention, there is provided the container disposition confirming unit which reads an identifier affixed to a container disposed in the container disposition area to obtain disposition data. Consequently, not only is there simple control of the position coordinate of the disposition of the container, but also the recognition of the type of container or substances stored in the container. Therefore, highly reliable automization processing can be performed, and erroneous processes due to the errors in the disposition of the container can be excluded so as to increase the reliability.

A seventh aspect of the present invention is a monitoring function-equipped dispensing system wherein the monitoring unit determines a normal pressure pattern and a normal optical pattern based on experiment or data that has been previously obtained based on operation instructions with respect to the pressure regulating unit, and compares a pressure or optical pattern with a normal pressure pattern or a normal optical pattern, and then associates the comparison results as the judged results, with data specifying the pertinent operation instructions and nozzle.

In the comparison, for example, a pattern recognition is used which determines "normal" if the liquid surface position is matched with a line showing a predetermined liquid amount or within a predetermined range from the line, and "abnormal" if the liquid surface position is out of the predetermined range.

According to the seventh aspect of the present invention, the comparison results of the normal pressure pattern and the normal optical pattern are obtained as the judged results, and hence judgement is easy and reliable.

An eighth aspect of the present invention is a monitoring function-equipped dispensing system wherein the monitoring function-equipped dispensing system is further provided with a magnetic work area in a predetermined position on the elevating/lowering route of the pipelines, and there is a magnetic force unit which is movably provided with respect to the magnetic work area and which is capable of applying and removing a magnetic force to the inside of the pipelines positioned in the magnetic work area.

The magnetic force unit may be capable of applying and removing a magnetic force by providing a permanent magnet so that it can be closer or separated with respect to the pipelines positioned in the magnetic work area. Alternatively, a magnetic force may be applied or removed by applying or breaking an electrical current while an electromagnet is close to the pipelines positioned in the magnetic work area.

According to the eighth aspect of the present invention, by providing the magnetic work area in a predetermined position on the elevating/lowering route, a magnetic force can be readily applied to the inside of the pipelines by just the elevating operation of the pipelines and the moving operation of the magnetic force unit. Therefore various processes can be efficiently and rapidly performed.

A ninth aspect of the present invention is a monitoring function-equipped dispensing system wherein a boring pin is provided in parallel with the nozzles.

Here, if a container disposed in the container disposition area is provided with a seal-shaped lid for preventing evaporation of the stored liquid, the boring pin opens a hole through the lid so as to facilitate insertion of the pipeline. Since the boring pin is normally formed longer than the nozzle, but shorter than the attached pipeline, a hole is opened before inserting the pipeline into the nozzle.

According to the ninth aspect of the present invention, if the respective containers are provided with seal-shaped lids for preventing evaporation, holes can be opened by the single-purpose boring pin without using the pipelines. Therefore holes can be opened without damaging the points of the pipelines.

A tenth aspect of the present invention is a monitoring function-equipped dispensing system wherein the pipelines are attachably provided on nozzles of the pressure regulating unit.

The nozzles are preferably attachable with two or more types of pipelines having different diameters. In this case, the attachment of the nozzle is formed to have two or more steps of diameters.

According to the tenth aspect of the present invention, since the nozzles are attachable with two or more types of pipelines having different diameters, a pipeline can be selected according to the liquid amount being handled in the process. Consequently, since various processes can be performed, there is generality.

An eleventh aspect of the present invention is a monitoring function-equipped dispensing system wherein a part of the containers set in the container disposition area can be accommodated in a state such that pipelines that are attachable to the nozzles, can be attached to the nozzles.

By storing the pipelines in the container disposition area, the pipelines can be attached by simply elevating or horizontally moving the nozzles. Therefore the processing is effective and quick. Moreover, by providing a mechanism for detaching the pipelines, to the monitoring function-equipped dispensing system, the pipelines can be attached and detached, and various processes can be performed more efficiently.

According to the eleventh aspect of the present invention, the pipelines can be stored in a part of the container in the container disposition area, and hence the pipelines can be attached by simply elevating or horizontally moving the nozzles. Therefore it is suitable for automization of processing, and various process can be consistently, efficiently, and rapidly performed without involving manpower.

A twelfth aspect of the present invention is a monitoring function-equipped dispensing system wherein, based on the disposition data of the container in the container disposition area, obtained from the disposition confirming unit, the monitoring unit associates the judged results as the monitoring results, with the pertinent container data.

According to the twelfth aspect of the present invention, based on the disposition data obtained from the disposition confirming unit, the judged results as the monitoring results, can be associated with the data of the pertinent container, and hence more reliable monitoring can be performed.

In a thirteenth aspect of the present invention, a container to be disposed in the container disposition area comprises a plurality of liquid storage portions which are disposed in an approximate matrix form where the pipelines can be inserted/extracted, and the container is assembled allowing disassembly by binding a group of a plurality of rows of liquid storage portions. The container is assembled such that bases with openings provided in the rows of liquid storage portions are connected by holding with catches provided under a planar holder that has openings provided so as to correspond to the pertinent openings. The holder may be provided with partitions projecting upward between the respective rows of the liquid storage portions.

According to the thirteenth aspect of the present invention, a container to be disposed in the container disposition area is assembled allowing disassembly by binding a group of a plurality of rows of liquid storage portions. Consequently, it becomes readily possible to confirm whether or not reagents and the like are previously stored in the liquid storage portions, even from the side, by disassembling the container. Consequently, highly reliable processes suitable for automization can be performed.

A fourteenth aspect of the present invention is a method of monitoring a dispensing system, wherein in a dispensing system having: one or more translucent or semi-translucent pipelines; one or more pressure regulating units which respectively regulate the pressures in the pipelines so as to suck and discharge fluids with respect to the pipelines; an elevating/lowering unit which enables the pipelines to be elevated/lowered so that they can be inserted/extracted with respect to a container in a container disposition area which is provided under the pipelines and has containers disposed therein; comprising: a pressure measurement step for measuring the pressures in the respective pipelines when operation instructions are given to the pressure regulating unit; an optical measurement step for optically measuring the conditions in the pipelines above the container disposition area, when respective operations based on operation instructions including operation instructions to the pressure regulating unit are completed; and a monitoring step for judging the conditions in the pipelines based on the operation instructions and measurement results so as to obtain monitoring results that associate the judged results with respective pipelines and the respective operation instructions.

According to the fourteenth aspect of the present invention, as described in the first aspect of the present invention, the pressure measurement and the optical measurement mutually reinforce each other, promoting a faithful and accurate execution of the operation instructions. Furthermore, by monitoring the execution of the operations, an even more reliable system can be realized. Moreover, by monitoring for various abnormalities, reliable processing in the dispensing system can be realized, and high reliability can be obtained without having any complicated structure such as feedback, nor performing any complicated control. Furthermore, if there is any abnormality, the process can be continued without interrupting the process, and an operation, a pipeline, or a container having the abnormality can be specified after completing the process, so that the process can be efficiently performed. Furthermore, since the measurements are separated to perform the pressure measurement during the operation, and to perform the optical measurement after completing the operation, then the required memory capacity can be economized, and every condition for the pipeline, the liquid stored in the pipeline, or the like including the condition during the operation and the condition in the container can be efficiently monitored.

A fifteenth aspect of the present invention is a method of monitoring a dispensing system wherein the optical measurement step is performed by capturing the image of at least one pipeline at once.

The fifteenth aspect of the present invention has a similar effect to that described for the second aspect of the present invention.

A sixteenth aspect of the present invention is a method of monitoring the dispensing system wherein the optical measurement step performs measurement by irradiating light to the pipelines above the container disposition area.

The sixteenth aspect of the present invention has a similar effect to that described for the fourth aspect of the present invention.

A seventeenth aspect of the present invention is a method of monitoring a dispensing system which has a disposition confirming step for reading an identifier affixed to a container disposed in the container disposition area, to obtain disposition data showing the type and the disposition of the containers in the container disposition area.

The seventeenth aspect of the present invention has a similar effect to that described for the sixth aspect of the present invention.

An eighteenth aspect of the present invention is a method of monitoring a dispensing system wherein the operation monitoring step has a monitoring step for determining a normal pressure pattern and a normal optical pattern based on experiment or data that has been previously obtained based on operation instructions with respect to the pressure regulating unit, and associating judged results for whether or not there is a displacement from the normal pressure pattern or the normal optical pattern, with the data related to the pertinent operation instructions and pipelines.

The eighteenth aspect of the present invention has a similar effect to that described for the seventh aspect of the present invention.

A nineteenth aspect of the present invention is a method of monitoring a dispensing system having a step, after the disposition confirming step and before attaching the pipelines to the nozzles, for using a boring pin provided in parallel with the axial direction of the nozzles to open holes through lids provided on the respective containers.

The nineteenth aspect of the present invention has a similar effect to that described for the ninth aspect of the present invention.

A twentieth aspect of the present invention is a method of monitoring a dispensing system wherein the monitoring step, based on disposition data of containers in the container disposition area, obtained from the disposition confirming step, associates the judged results as the monitoring results, with the pertinent container.

The twentieth aspect of the present invention has a similar effect to that described for the twelfth aspect of the present invention.

### BRIEF DESCRIPTION OF THE DRAWINGS

FIG. 1 is a block diagram of a monitoring function-equipped dispensing system according to an embodiment of the present invention.
FIG. 2 is a perspective view of a mechanism unit of the monitoring function-equipped dispensing system according to the embodiment of the present invention.
FIG. 3 is an enlarged perspective view of a part (dispensing unit) of the mechanism unit of the monitoring function-equipped dispensing system shown in FIG. 2.
FIG. 4 is a side view of the dispensing unit shown in FIG. 3.
FIG. 5 is a cross-sectional view of the dispensing unit shown in FIG. 4 taken along the line A-A, and a bottom view thereof.
FIG. 6 is a plan view of the mechanism unit of the monitoring function-equipped dispensing system shown in FIG. 2.
FIG. 7 is an enlarged perspective view of a part (container group) of the mechanism unit of the monitoring function-equipped dispensing system shown in FIG. 2.
FIG. 8 is an exploded perspective view of the container group shown in FIG. 7.
FIG. 9 is a flowchart of a method of monitoring a dispensing system according to an embodiment of the present invention.

### BEST MODE FOR CARRYING OUT THE INVENTION

Here is a description of a monitoring function-equipped dispensing system and a method of monitoring the dispensing system according to embodiments of the present invention, with reference to drawings. The description of the present embodiments should not be considered as limiting the present invention unless particularly specified.

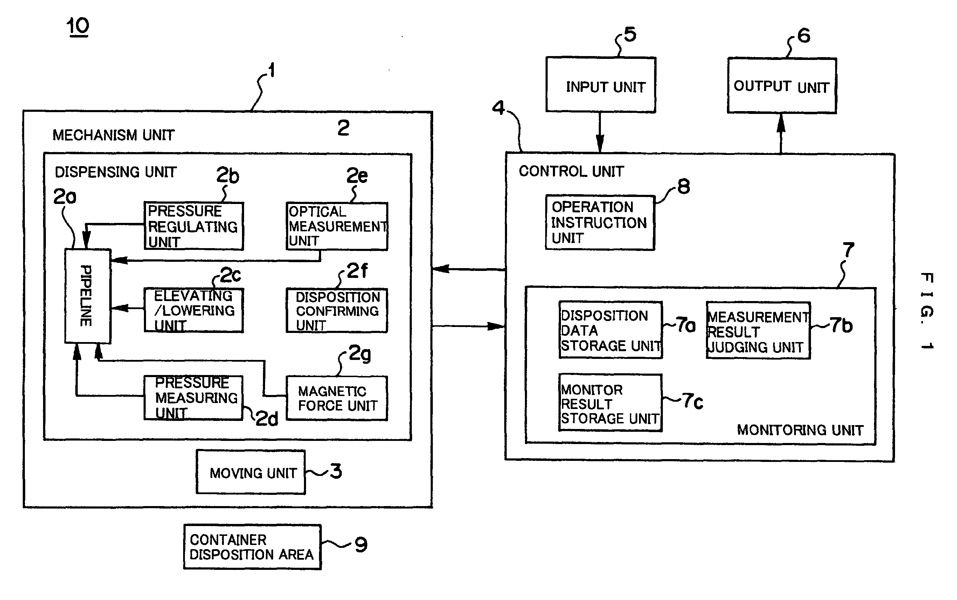

FIG. 1 is a block diagram of a monitoring function-equipped dispensing system 10 according to the embodiment of the present invention.

The monitoring function-equipped dispensing system 10 according to the present embodiment comprises: a mechanism unit 1 comprising a dispensing unit 2 which sucks and discharges a liquid with respect to a container, and a moving unit 3 which moves the dispensing unit 2 relatively with respect to a container; a control unit 4 which controls operation instructions and monitoring of the respective operations with respect to the mechanism unit 1 according to instructions from the outside; an input unit 5 which inputs data to the control unit 4 and performs operation instructions and the like; an output unit 6 which outputs the monitoring results of the respective operation instructions; and a container disposition area 9 where the containers are disposed.

Moreover, the dispensing unit 2 has: one or more translucent or semi-translucent pipelines 2a; one or more pressure regulating units 2b which are respectively communicated with to the pipelines 2a to independently regulate the pressures in the pipelines 2a according to operation instructions from the outside so as to suck, discharge, and store fluids with respect to the pipelines 2a; an elevating/lowering unit 2c which enables the pipelines 2a to be elevated/lowered so that they can be inserted/extracted with respect to a container in the container disposition area 9 which is provided under the pipelines 2a and has containers disposed therein; a pressure measuring unit 2d which independently measures the pressures in the respective pipelines 2a when operation instructions are given to the pressure regulating unit 2b; and an optical measurement unit 2e which measures the conditions in the pipelines 2a above the container disposition area 9, when the respective operations based on the operation instructions are completed.

In addition, the dispensing unit 2 has at least: a disposition confirming unit 2f which reads an identifier affixed to the containers disposed in the container disposition area 9 to obtain disposition data showing the type and the disposition of the containers in the container disposition area; and a magnetic force unit 2g which is movably provided with respect to a magnetic work area provided in a predetermined position on the elevating/lowering route of the pipelines 2a and capable of applying and removing a magnetic force to the inside of the pipelines positioned in the magnetic work area.

The dispensing unit 2 is provided so that the pipelines 2a can be inserted/extracted with respect to all containers disposed in the container disposition area 9 by the moving unit 3 provided in the mechanism unit 1.

The control unit 4 has: an operation instruction unit 8 which controls the mechanism unit 1 according to instructions from the input unit 5; and a monitoring unit 7 which judges the conditions in the pipelines 2a based on at least the operation instructions to the pressure regulating unit 2b, and the measurement results of the pressure measuring unit 2d and the optical measurement unit 2e, so as to obtain monitoring results that associate the judged results with respective pipelines and the operation instructions.

Furthermore, the monitoring unit 7 has: a disposition data storage unit 7a which stores the disposition data obtained from the disposition confirming unit 2f; a measurement result judging unit 7b which uses the measurement results to determine a normal pressure pattern and a normal optical pattern based on experiment or data that has been previously obtained based on operation instructions with respect to the pressure regulating unit, and compares a pressure or optical pattern with a normal pressure pattern or a normal optical pattern, and then associates the comparison results as the judged results, with the data related to the pertinent operation instructions and nozzle or the pipelines; and a monitor result storage unit 7c which stores the monitoring results.

Here, the control unit 4 is constituted by an information processor that has a CPU, various memories, and various program data (not shown). Furthermore, the input unit 5 is constituted by a keyboard, a mouse, a switch, a communication line, or the like (not shown). Moreover, the output unit 6 may have a display unit such as a liquid crystal or a CRT, a printer, a CD drive, a DVD drive, a communication line, or the like.

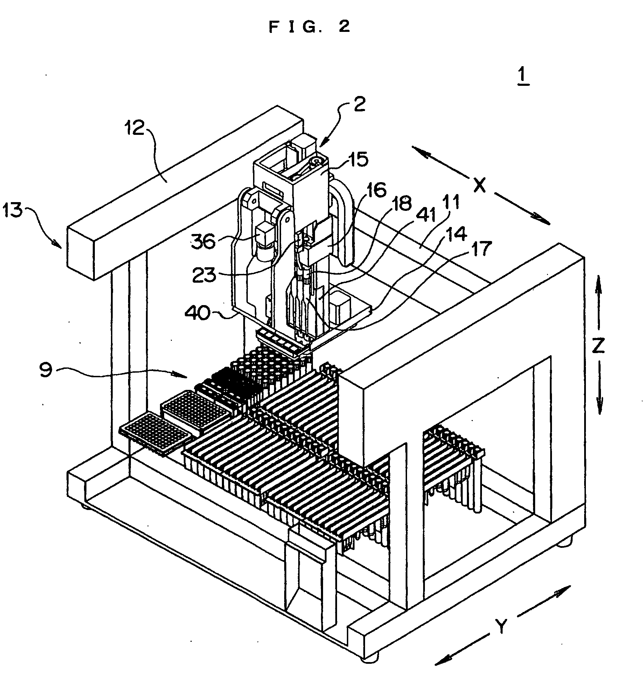

Next is a specific description of the mechanism unit 1 and the container disposition area 9 in the monitoring function-equipped dispensing system 10 according to the present embodiment, with reference to FIG. 2.

In the mechanism unit 1, a container group which stores liquids and substances such as various reagents contained in the liquid is set in the container disposition area 9. The mechanism unit 1 has a function of performing processes such as dispensation, transport, extraction, separation, isolation, stirring, washing, and the like by sucking and discharging liquids with respect to the container group in the container disposition area 9 while monitoring the processes by itself. The mechanism unit 1 has: a dispensing unit 2; an X axis member 11 and an Y axis member 12 which operably support the dispensing unit 2; and a frame body 13 on which the container disposition area 9 is provided underneath the dispensing unit 2.

The dispensing unit 2 is attached to the X axis member 11 using a timing belt (not shown) movably in the X axis direction, and the X axis member 11 itself is also attached to the Y axis member 12 using a timing belt (not shown) movably in the Y axis direction. Consequently, the dispensing unit 2 is movably provided in the X axis direction and the Y axis direction along the horizontal plane over the container disposition area 9 in the frame body 13. Consequently, since the dispensing unit 2 is not supported from the bottom, it is movably provided over the whole container disposition area 9 in the frame body 13. The size of the frame body 13 here is for example about 90cm in the X axis direction and about 70cm in the Y axis direction. Here, the X axis member 11 and the Y axis member 12 correspond to the moving unit 3.

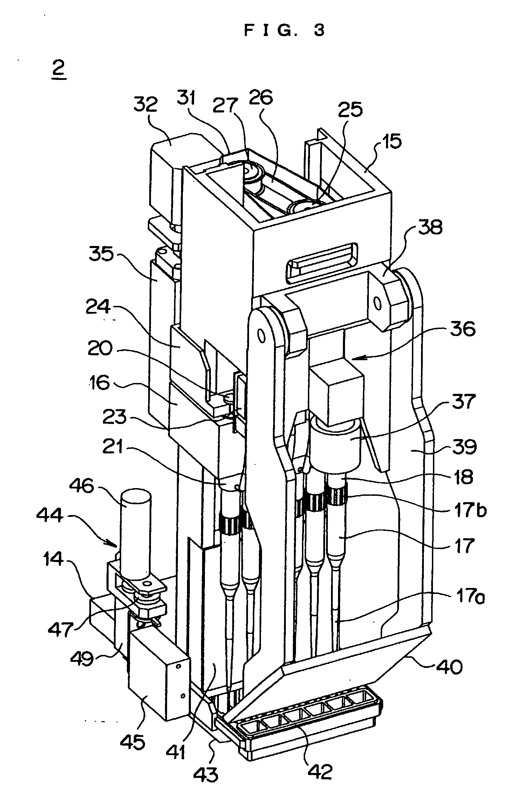

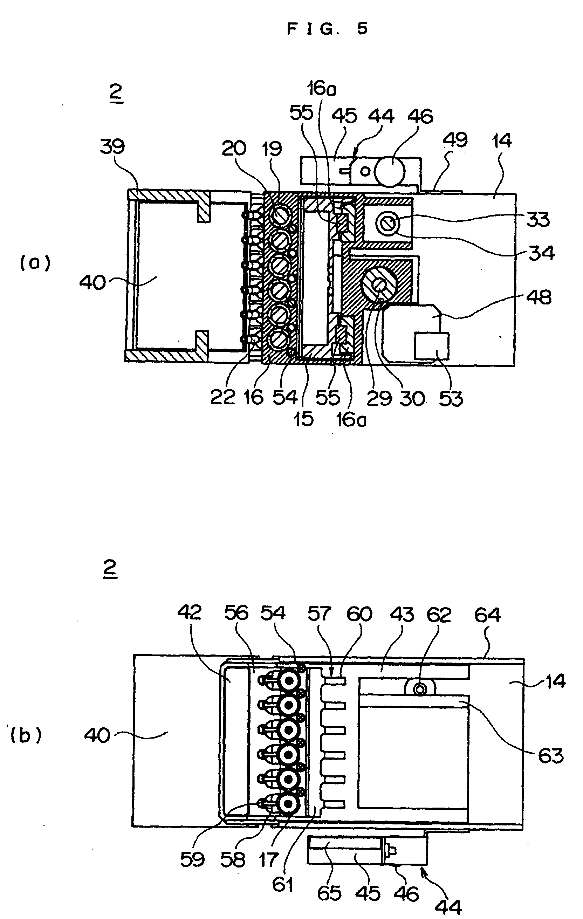

As shown in FIG. 2 or its enlargement in FIG. 3, the dispensing unit 2 has: for example, a rectangular base plate 14 which is horizontally provided; a support 15 which is fixed and vertically provided on the base plate 14, and movably attached to the X axis member 11; and a Z axis slider 16 which is supported to be freely elevated/lowered with respect to the support 15. The Z axis slider 16 is provided with: a plurality of (six in this example) disposable pipette tips 17 serving as the pipelines 2a which is translucent and movably provided in the vertical direction through the base plate 14; a plurality of (six in this example) nozzles 18 to which the pipette tips 17 are detachably attached respectively; cylinders 19 (FIG. 5) which are communicated with the pipette tips 17 through the nozzles 18 to respectively regulate the pressures in the pipette tips 17 so that the pipette tips 17 suck and discharge liquids and the like; and plungers 20 which are slidable in the cylinders 19. The pipette tip 17 is preferably formed to have two steps with a small diameter and a large diameter, for example.

The Z axis slider 16 enables the points 17a of the pipette tips 17 provided on the Z axis slider 16 to be elevated/lowered so that they can be inserted/extracted with respect to one or more containers set in the container disposition area 9 which is provided under the base plate 14, through the base plate 14.

The nozzle 18 is preferably formed in a pipe shape having two steps with a small diameter and a large diameter. As a result, two types of pipette tips having attachments 17b of a small diameter and a large diameter can be attached.

Moreover, the container disposition area 9 is preferably provided with an area for storing one or more pipette tips 17 to be attached to the respective nozzles 18, or one or more pipette tips 17 detached from the nozzles 18.

Furthermore, the dispensing unit 2 has a pressure sensor 23 serving as the pressure measuring unit 2d which communicates with to the pipette tips 17 through tubes 22 by providing manifolds 21 between the nozzles 18 and the cylinders 19 so as to respectively measure the pressure conditions in the respective pipette tips 17.

On the Z axis slider 16, a P axis slider 24 for vertically driving the plungers 20 in the cylinders 19 is movably provided in the vertical direction with respect to the Z axis slider 16.

A gear 25 is provided on the shaft of a Z axis motor (not shown), and the gear 25 is linked with a gear 27 so as to rotatably drive it through a timing belt 26. The gear 27 is linked with a Z axis ball screw 29 so as to rotatably drive it through a coupling 28. A nut 30 (FIG. 5) is screwed on the Z axis ball screw 29 and vertically moved by the rotation of the Z axis ball screw 29. As a result, the Z axis slider 16 that is fixed to the nut 30 is vertically moved. Reference symbol 31 denotes a belt tray.

The P axis slider 24 is fixed to a nut 34 which is linked with a shaft of a P axis motor 32 and vertically moved while being screwed on a P axis ball screw 33 (FIG. 5) which is driven to rotate by the P axis motor 32. The P axis ball screw 33 is formed integrally with or fixed to the Z axis slider 16, and is provided in a P axis housing 35 which supports the P axis motor 32. Consequently, the P axis motor 32, the P axis housing 35, the P axis ball screw 33, and in addition, the cylinders 19, the pipette tips 17, the nozzles 18, the pressure sensor 23, and the like are fixed to the Z axis slider 16, whereas the P axis slider 24 is fixed to the plungers 20 and the nut 34, and vertically movable with respect to the Z axis slider 16.

Here, the nozzles 18, the cylinders 19, the plungers 20, the P axis slider 24, the P axis motor 32, the P axis ball screw 33, and the like correspond to the pressure regulating unit 2b.

The Z axis slider 16, the Z axis motor, the gear 25, the gear 27, the timing belt 26, the Z axis ball screw 29, the nut 30, and the like correspond to the elevating/lowering unit 2c.

Moreover, the pressure sensor 23, the tubes 22, and the manifolds 21 correspond to the pressure measuring unit 2d, and are communicated with the pressure regulating unit 2b.

Furthermore, the dispensing unit 2 according to the present embodiment has a CCD camera 36 serving as the imaging unit which is fixed and provided on the support 15 on the front face thereof so as to capture the image of the conditions inside of the pipette tips 17. By turning the optical axis of a lens 37 of the CCD camera 36 vertically downward, the system is kept from being extended in the horizontal direction, and the dispensing unit 2 is formed in a slim shape.

An rotatable support part 38 is fixed and provided on the support 15 above the CCD camera 36. Two arms 39 are supported on the rotatable support part 38, so that they can be rotated at a predetermined angle on one end thereof Moreover, a mirror 40 serving as the reflector is attached to the tips of the arms 39. Consequently, the angle of the reflecting surface of the mirror 40 with respect to the axial direction of the pipette tips 17 can be changed according to the position of the pipette tips 17. The reflecting surface of the mirror 40 is provided so as to have an angle which is capable of reflecting the light from the pipette tips 17 positioned on the base plate 14 towards the direction of the optical axis of the CCD camera 36. A planar back light 41 is provided so as to be fitted onto the front face of the bottom of the support 15 above the base plate 14 where the pipette tips 17 can pass, so as to enable irradiating of the pipette tips 17.

Here, the CCD camera 36, the mirror 40, the back light 41, and the like correspond to the optical measurement unit 2e.

As shown in FIG. 3, on the base plate 14, a liquid storage 42 for receiving fluids dripping from the pipette tips 17 is fixed and provided on an M axis slider 43 which is movably provided in the horizontal direction with respect to the base plate 14.

Moreover, the dispensing unit 2 is provided with a barcode reader 44 fixed to the base plate 14, for reading barcodes which are affixed on the upper side of the respective containers in the container disposition area 9, serving as an identifier for identifying the container itself or substances stored in the container. The barcode reader 44 is provided with a photometer (FIG. 5), which has: a read unit 45 which reads barcodes from the top, affixed on the containers set in the container disposition area 9 that is provided underneath the base plate 14; a reversing motor 46 for horizontally reversing the read unit 45 by 90 degrees according to the direction of the affixed barcode, that is the vertical direction and the horizontal direction: a mechanism 47 which transmits the rotation of the reversing motor 46; and a fixture 49 for fixing the reversing motor 46 to the base plate 14. The barcode reader 44 corresponds to the disposition confirming unit 2f.

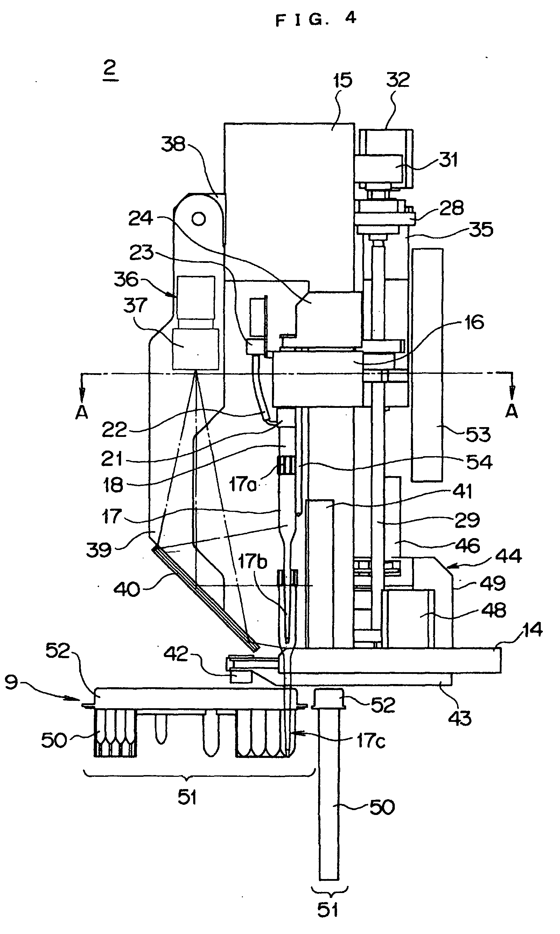

FIG. 4 is a side view showing the dispensing unit 2 from the side direction.

As shown in FIG. 4, the M axis slider 43 is provided under the base plate 14 and is movably driven in translation back and forth along the base plate 14 by a M axis motor 48 provided above the base plate 14. Moreover, below the base plate 14, there is the container disposition area 9 in which containers 51 having a plurality of various liquid storage portions 50 are provided. Partitions 52 are provided above the containers so as to avoid cross contamination between rows for substances stored in respective rows of the liquid storage portions 50. A barcode for identifying the container itself or the substances stored in the container is affixed on the upper side of the container 51.

Moreover, as shown in FIG. 4, the pipette tip 17 may be lowered through the base plate 14 until it reaches the bottom of the container 51, to the position as shown by reference symbol 17c.

In FIG. 4, reference symbol 53 denotes a cable duct which stores various cables for driving various motors, the pressure sensor 23, the CCD camera 36, or the like, or for transferring data. Reference symbol 54 denotes a boring pin which opens a hole through a lid of a lidded liquid storage portion which is fitted with a lid covering the opening so as to prevent evaporation of the stored liquid, so that the point of the pipette tip 17 can be inserted into the liquid storage portion.

FIG. 5 (a) is a cross-sectional view of the dispensing unit 2 shown in FIG. 4 taken along the line A-A.

Here, reference symbol 55 denotes a linear guide which guides the Z axis slider 16 when it is vertically moved by the Z axis ball screw 29, and which is fixed and provided on the support 15. The linear guide 55 is provided with a fitting member 16a which is fixed and provided on the Z axis slider 16, and is engaged with the linear guide 55.

FIG. 5 (b) is a bottom view of the dispensing unit 2. At the end of the M axis slider 43, the abovementioned liquid storage 42 is provided. Approximately halfway along the M axis slider 43, there are provided a remover 56 for detaching the pipette tips 17 that have been attached to the nozzles 18, from the nozzles 18, and a magnetic force unit 57 which corresponds to the magnetic force unit 2g for applying the magnetic force to the inside of the pipette tips.

The remover 56 is used for hooking and dropping the pipette tips 17 by lowering the Z axis slider 16 while this is in contact with the nozzles 18. The remover 56 is provided with a plurality of (six in this example) cuts (large diameter portion 58 and small diameter portion 59) having two steps of semicircles with two types of inner diameters according to the outer diameters of the nozzle 18, which are linearly disposed at intervals where the nozzles 18 are disposed.

The magnetic force unit 57 has a plurality of (six in this example) linearly disposed magnets 60 (permanent magnet or electromagnet), provided on the M axis slider 43. The magnetic force unit 57 is driven together with the liquid storage 42 by the M axis motor 48. A gap 61 of a fixed width is provided between the magnetic force unit 57 and the remover 56. The gap 61 corresponds to the magnetic work area. By moving the M axis slider 43 forward for a predetermined distance, the respective magnets 60 of the magnetic force unit 2g can be made closer to the pipette tips 17 which have been inserted into the gap 61, so as to apply the magnetic force. By moving the M axis slider 43 backward for a predetermined distance and/or elevating it by the elevating/lowering unit 2c, the magnets 60 can be made apart so as to remove the magnetic force.

The M axis slider 43 is movably driven in the horizontal direction by a pinion 62 that is linked with the shaft of the M axis motor 48 and driven to rotate, and a rack 63 which is horizontally driven in translation by the pinion 62. Reference symbol 64 denotes a guide member which guides the movement of the M axis slider 43.

Moreover, reference symbol 65 denotes a photometer provided in a slim shape on the bottom of the read unit 45 of the barcode reader 44, which receives reflected light from the barcodes affixed on the upper side of the containers 51 so as to measure the barcode data.

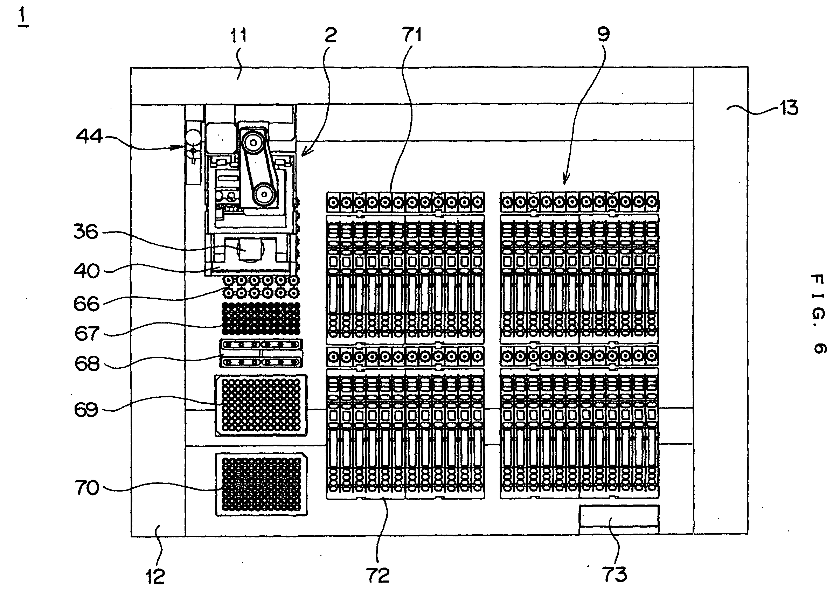

Next, FIG. 6 shows a plan view of the mechanism unit 1 and the container disposition area 9 according to the present embodiment.

In the top left of the drawing, the container disposition area 9 has a large diameter tip container group 66 which stores unused large diameter pipette tips 17, and a small diameter tip container group 67 which stores unused small diameter pipette tips. The capacity of the large diameter pipette tip 17 is 3500 µl for example, and the capacity of the small diameter pipette tip is 200 µl for example. In the bottom left, the container disposition area 9 is further provided with: a master reagent area 68 which stores master reagents; a microplate 69 which stores a plurality of specimens; and a microplate 70 which stores the extracts.

In the top middle and the top right of the drawing, the container disposition area 9 is provided with tip cartridges 71 which store the used large diameter pipette tips 17. In the middle and the right of the drawing of the container disposition area 9, there is disposed container groups 72 comprising a plurality of (six in this example) cartridge-shaped containers respectively storing reagents or magnetic particles which have been previously determined and sealed by a seal. Reference symbol 73 denotes a tip waste duct for disposing of the used pipette tips.

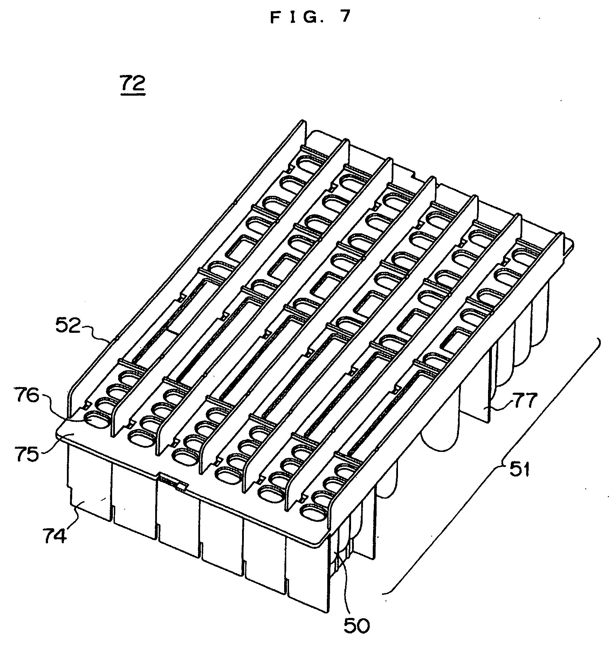

FIG. 7 is an enlargement showing one of the container groups 72 that is respectively disposed in the container disposition area 9. The container group 72 has six cartridge-shaped containers 74 bundled together, matching with the number of the nozzles of the dispensing unit 2, and has a six-set holder 75 which bundles together the cartridge-shaped containers 74. The cartridge-shaped containers 74 corresponds to the container 51. The cartridge-shaped containers 74 are provided with a supporting material 74a besides the container 51. Moreover, the six-set holder 75 is provided with partitions 52 on the opposite edges of the six-set holder 75 and on the boarders between the respective cartridge-shaped containers 74, which project upwards. Furthermore, the six-set holder 75 is provided with openings 76 having positions and sizes corresponding to the openings of the liquid storage portions 50 provided on the respective cartridge-shaped containers 74 that are attached on the backside thereof, so that the pipelines can be inserted into the liquid storage portions 50.

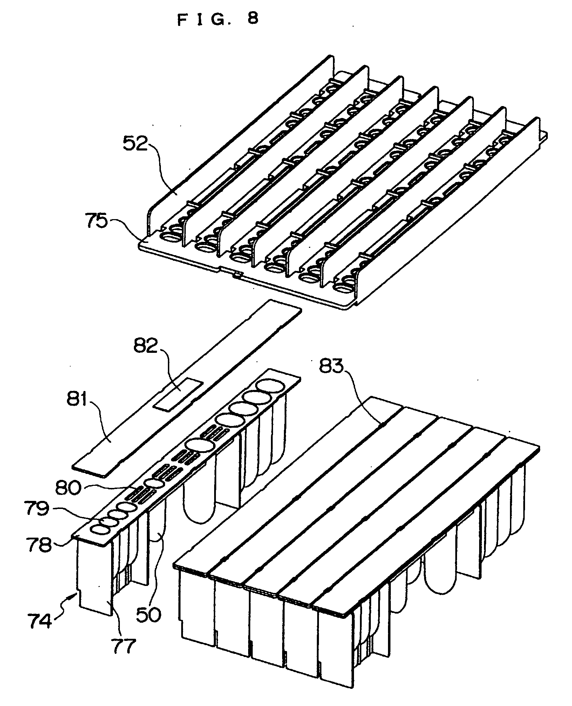

FIG. 8 is a perspective view showing the exploded container group 72.

The cartridge-shaped containers 74 have a base 78, and the respective liquid storage portions 50 and leg portions 77 are provided underneath the base 78. Moreover, openings 79 of the respective liquid storage portions 50 are bored through the base 78. Furthermore, reference symbol 80 denotes air holes for letting heated air escape upward, in the case where a heater for keeping the inside of the liquid storage portions 50 at a constant temperature is provided in the vicinity of the liquid storage portions 50. If as required a thin seal 81 is covered over the base 78, it becomes possible to prevent cross contamination and evaporation of reagents and the like which have been previously stored in the respective liquid storage portions 50. Moreover, in the case where the seal 81 is covered, a barcode 82 serving as an identifier is affixed on the seal 81. The cartridge-shaped container 74 is held such that the base 78 is supported by holding with catches (not shown) provided at intervals of the width of the respective cartridge-shaped containers 74 on the backside of the six-set holder 75, in positions corresponding to notches 83 provided in the base 78 and the seal 81.

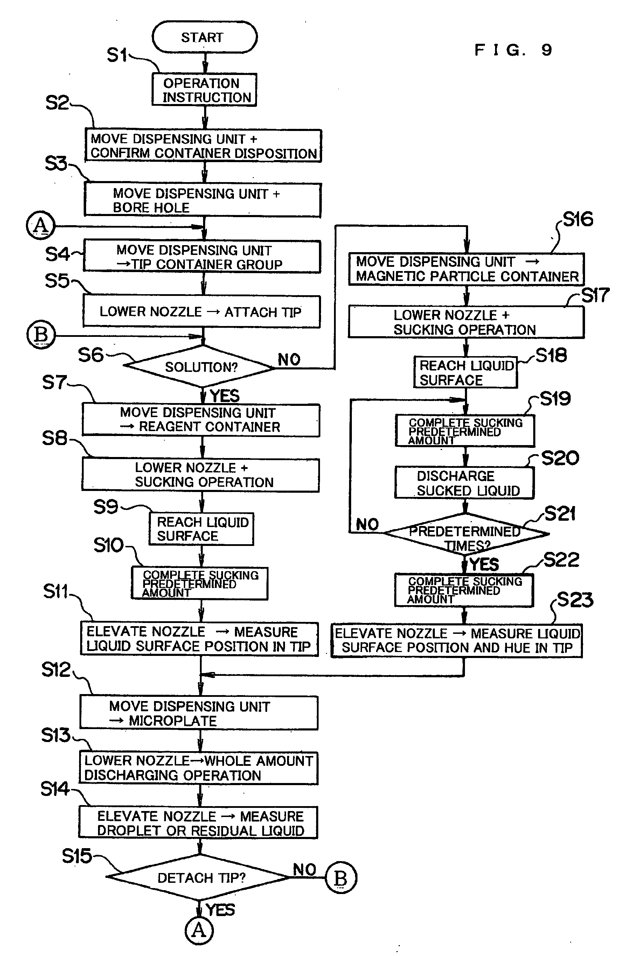

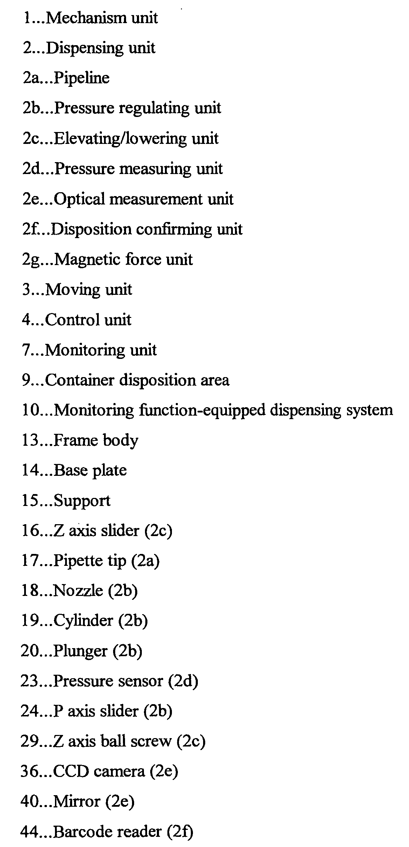

Next is a description of the operation of the monitoring function-equipped dispensing system 10, based on the process flowchart of FIG. 9.

As shown in the flowchart, in step S1, when there are instructions for predetermined operations from an operator through the input unit 5, the operation instruction unit 8 in the control unit follows the installed program to serially output instruction signals with respect to the mechanism unit 1. In step S2, the dispensing unit 2 in the mechanism unit 1 follows the instructions and is moved all around inside the container disposition area 9 thereunder, and the barcode reader 44 reads the barcode 82. affixed on the upper side of a container which is directly beneath, while matching the direction of the photometer 65 according to the direction of the barcode 82, and sends the read data as the disposition data to the control unit 4, and then stores it in the disposition data storage unit 7a.

In step S3, when the disposition of the containers is confirmed, the dispensing unit 2 is moved, and holes are bored through the seal 81 covering the openings of the respective containers, using the boring pin 54 provided in parallel with the nozzles 18, by the elevating/lowering unit 2c.

In step S4, the dispensing unit 2 is moved to the large diameter tip container group 66 storing unused pipette tips 17 at one corner of the container disposition area 9. In step S5, the six nozzles 18 of the dispensing unit 2 are lowered all together to attach the six pipette tips 17 to the nozzles 18.

In step S6, it is judged whether a substance to be transported hereafter is in the form of a solution, or a suspension having solid bodies such as magnetic particles suspended therein. If it is a reagent in the form of a solution, the flow proceeds to step S7 in which the dispensing unit 2 is moved to the container group 72 storing the pertinent reagent.

In step S8, while sucking on the six pipette tips 17, these are lowered all together so as to insert the points into the liquid storage portions 50. That is, the pipette tips 17 themselves are lowered while gradually elevating the plungers 20 by a small amount. At this time, the pressure change in the pipette tips 17 is monitored by the pressure sensor 23.

At this time, if a pipette tip 17 is clogged, the pressure is decreased before reaching the liquid surface.

In step S9, when the points of the pipette tips 17 reach the liquid surface of the reagent stored in the liquid storage portions 50, the pressure in the pipette tips 17 is rapidly decreased. Therefore the liquid surface is detected at the pressure decrease time point that is detected by the pressure sensor 23.

When the liquid surface is detected, in step S10, while lowering the pipette tips 17 by an instructed amount, the plungers 20 suck a predetermined amount by elevating the P axis slider 24.

When sucking is completed, in step S11, the pipette tips 17 are elevated above the base plate 14 by the elevating/lowering unit 2c, and an image of the inside of the pipette tips 17 is captured by the CCD camera 36, to obtain the static image. Information of "normal" if the liquid surface position in the captured image is within a fixed range of a predetermined position determined by sucking of the instructed predetermined amount, or information of "abnormal" if it is out of the range, are stored in the monitor result storage unit 7c.

In step S 12, the dispensing unit 2 is transported to the microplate 69 storing the specimens, in a condition with the reagent stored in the pipette tips 17.

In step S13, the pipette tips 17 are lowered until the points thereof are inserted into the respective wells in the microplate 69, and the whole amount of the stored reagent is discharged.

In step S14, the pipette tips 17 are elevated by the elevating/lowering unit 2c, and the image of the six pipette tips 17 that are irradiated by the back light 41 above the base plate 14 is captured altogether by the CCD camera 36 to obtain the static image, so as to measure the presence/absence of residual liquid or droplets. Information of "normal" if it is normal, or information of "abnormal" if it is abnormal, are stored in the monitor result storage unit 7c.

In step S15, it is judged whether the used pipette tips 17 can be continually used, or the pipette tips 17 need to be replaced. If the pipette tips 17 need to be replaced, the pipette tips 17 are detached from the nozzles 18 by the remover 56 and stored in the tip cartridges 71, or discarded using the tip waste duct 73. The flow then proceeds again to step S4. If they can be continually used, the flow proceeds to step S6. At this time, it is preferable to confirm the presence/absence of the pipette tips using the CCD camera 36.

On the other hand, in step S6, if magnetic particles require to be processed, the flow proceeds to step S16. In such case, differing from the process of a solution, the suspension must to be stirred by repeating the sucking and discharging from step S 19 to step S21 prior to completing sucking the predetermined amount. Moreover, in order to measure whether or not the stirring has been sufficiently performed, in step S23, the CCD camera 36 measures not only the liquid surface position but also the hue or the luminosity.

The respective embodiments described above are specific exemplary examples for better understanding of the present invention, and are not limiting of other embodiments. Consequently, modifications can be made without departing from the scope of the present invention. For example, the above description is only for the case where a dispensing unit with six nozzles is used. However the number of the nozzles, therefore, the number of pipette tips, is not limited to this case, and may be four, eight, ten, or the like. Furthermore, the shape or the size of the pipette tip is neither limited to the above description. Moreover, the shape, the size, the type, or the like of the respective parts is neither limited to the above description. For example, instead of driving by a ball screw, driving may be performed using a timing belt, gear mechanism, hydraulic mechanism, or the like.

In the above description, the dispensing unit is movable with respect to the fixed container disposition area. However, the container disposition area may be movable while the dispensing unit is fixed. The description is only for the case where a mirror is used as the reflector. However the reflector may be any form other than a mirror as long as it changes the propagation direction of light, such as with a prism.

Moreover, the abovementioned respective components, parts, and devices, such as the pipeline, the container, the input unit, the output unit, the moving unit, and the mechanism, may be optionally combined while being appropriately changed in shape.

## Claims

1. A monitoring function-equipped dispensing system comprising: one or more translucent or semi-translucent pipelines; one or more pressure regulating units which respectively regulate the pressures in said pipelines so as to suck and discharge fluids with respect to said pipelines; an elevating/lowering unit which enables said pipelines to be elevated/lowered so that they can be inserted/extracted with respect to a container in a container disposition area which is provided under said pipelines and has containers disposed therein; a pressure measuring unit which measures the pressures in said respective pipelines when operation instructions are given to said pressure regulating unit; an optical measurement unit which optically measures the conditions of said pipelines above said container disposition area, when respective operations based on operation instructions including operation instructions to said pressure regulating unit are completed; and a monitoring unit which judges the conditions in said pipelines based on said operation instructions and measurement results of said pressure measuring unit and said optical measurement unit so as to obtain monitoring results that associate the judged results with respective pipelines and said respective operation instructions.

2. A monitoring function-equipped dispensing system according to claim 1, wherein said optical measurement unit has an imaging unit which captures an image of said plurality of pipelines at once

3. A monitoring function-equipped dispensing system according to either one of claim 1 and claim 2, wherein an optical axis of a lens of said imaging unit is along an axial direction of said pipeline, and said optical measurement unit further has a reflector which reflects the light incident from said pipeline towards the lens of said imaging unit.

4. A monitoring function-equipped dispensing system according to any one of claim 1 through claim 3, wherein said optical measurement unit further has a light irradiation unit which can irradiate light to said pipelines above said container disposition area.

5. A monitoring function-equipped dispensing system according to any one of claim 1 through claim 4, wherein said pipelines, pressure regulating unit, pressure measuring unit, optical measurement unit, and elevating/lowering unit are provided on a base plate, and there is a moving unit which can move said base plate relatively with respect to said container disposition area provided below said base plate, and said pipelines are provided so as to be movable in the vertical direction past said base plate so that points thereof can be respectively inserted/extracted into/from one or more containers provided in said container disposition area.

6. A monitoring function-equipped dispensing system according to any one of claim 1 through claim 5, which has a container disposition confirming unit which reads an identifier affixed to a container disposed in said container disposition area, to obtain disposition data showing the type and the disposition of a container in said container disposition area.

7. A monitoring function-equipped dispensing system according to any one of claim 1 through claim 6, wherein said monitoring unit determines a normal pressure pattern and a normal optical pattern based on experiment or data that has been previously obtained based on operation instructions with respect to said pressure regulating unit, and compares a pressure or optical pattern with a normal pressure pattern or a normal optical pattern, and then associates the comparison results as the judged results, with data related to the pertinent operation instructions and nozzle or pipeline.

8. A monitoring function-equipped dispensing system according to any one of claim 1 through claim 8, wherein said monitoring function-equipped dispensing system is further provided with a magnetic work area in a predetermined position on the elevating/lowering route of said pipelines, and there is a magnetic force unit which is movably provided with respect to said magnetic work area and which is capable of applying and removing a magnetic force to the inside of said pipelines positioned in said magnetic work area.

9. A monitoring function-equipped dispensing system according to any one of claim 1 through claim 9, wherein a boring pin is provided in parallel with said nozzles.

10. A monitoring function-equipped dispensing system according to any one of claim 1 through claim 10, wherein said pipelines are attachably provided on nozzles of said pressure regulating unit.

11. A monitoring function-equipped dispensing system according to any one of claim 1 through claim 10, wherein a part of the containers set in said container disposition area are accommodated in a state such that pipelines that are attachable to said nozzles, can be attached to said nozzles.

12. A monitoring function-equipped dispensing system according to any one of claim 1 through claim 11, wherein said monitoring unit based on the disposition data of containers in said container disposition area, obtained from said disposition confirming unit, associates said judged results as said monitoring results, with the pertinent container.

13. A monitoring function-equipped dispensing system according to claim 1, wherein, a container to be disposed in said container disposition area comprises a plurality of liquid storage portions which are disposed in an approximate matrix form where said pipelines can be inserted/extracted, and said container is formed by binding a group of a plurality of rows of liquid storage portions.

14. A method of monitoring a dispensing system, wherein in a dispensing system having: one or more translucent or semi-translucent pipelines; one or more pressure regulating units which respectively regulate the pressures in said pipelines so as to suck and discharge fluids with respect to said pipelines; an elevating/lowering unit which enables said pipelines to be elevated/lowered so that they can be inserted/extracted with respect to a container in a container disposition area which is provided under said pipelines and has containers disposed therein; comprising:
a pressure measurement step for measuring the pressures in said respective pipelines when operation instructions are given to said pressure regulating unit;
an optical measurement step for optically measuring the conditions in said pipelines above said container disposition area, when respective operations based on operation instructions including operation instructions to said pressure regulating unit are completed; and
a monitoring step for judging the conditions in said pipelines based on said operation instructions and measurement results so as to obtain monitoring results that associate the judged results with respective pipelines and respective operation instructions.

15. A method of monitoring a dispensing system according to claim 14, wherein said optical measurement step is performed by capturing the image of said plurality of pipelines at once.

16. A method of monitoring a dispensing system according to either one of claim 14 and claim 15, wherein said optical measurement step performs measurement by irradiating light to said pipelines above said container disposition area.

17. A method of monitoring a dispensing system, which has a disposition confirming step for reading an identifier affixed to a container disposed in said container disposition area, to obtain disposition data showing the type and the disposition of the containers in said container disposition area.

18. A method of monitoring a dispensing system according to any one of claim 14 through claim 17, wherein said monitoring step has a monitoring step for determining a normal pressure pattern and a normal optical pattern based on experiment or data that has been previously obtained based on operation instructions with respect to said pressure regulating unit, and associating judged results for whether or not there is a displacement from the normal pressure pattern or the normal optical pattern, with data related to the pertinent operation instructions and pipelines.

19. A method of monitoring a dispensing system according to any one of claim 14 through claim 18, having a step, after said disposition confirming step and before attaching the pipelines to the nozzles, for using a boring pin provided in parallel with the axial direction of said nozzles to open holes through lids provided on the respective containers.

20. A method of monitoring a dispensing system according to any one of claim 14 through claim 19, wherein said monitoring step, based on the disposition data of the containers in said container disposition area, obtained from said disposition confirming step, associates said judged results as said monitoring results, with the pertinent container.
